# EUROPEAN PATENT APPLICATION

(11) **EP 4 678 008 A1**
(43) Date of publication of application: **14.01.2026**
(21) Application number: 24767091.2
(22) Date of filing: 02.03.2024
(51) Int. Cl.: A23G 1/30

(54) **WHITE CHOCOLATE CONFECTION PRODUCTION METHOD**

(30) Priority: 03.03.2023 JP 2023046028
(71) Applicant: EARTH DESIGN CO., LTD., Sanuki City, Kagawa 7692321 (JP)
(72) Inventor: IGAWA, MUNETAKA, Sanuki City, Kagawa 7692321 (JP)
(74) Representative: Stolmár & Partner Patentanwälte PartG mbB
(86) International application number: PCT/JP2024/007917
(87) International publication number: WO 2024/185723

(57) **Abstract**

Provided is a method for producing a white chocolate confection that uses only white chocolate and has a smooth melt-in-the-mouth quality of chocolate, a distinctive texture and aroma, and a rugged appearance like small rocks, by rapidly cooling after baking. In the method, square-cut white chocolate pieces are uniformly spread on a baking sheet to a height of 1.0 cm to 1.5 cm, the square-cut white chocolate pieces each having a size of 1.8 cm to 2.2 cm in length, 1.8 cm to 2.2 cm in width, and 1.0 cm to 1.5 cm in height. The white chocolate is heated in an oven set to a temperature of 170°C to 190°C for 16 to 18 minutes. The white chocolate is stirred with a heat-resistant spatula, after the heating is completed, to avoid unevenness, in a state in which cacao components contained in the white chocolate are browned by the heating, a dark brown layer is formed on a surface of the white chocolate, and fat content oozes out. A heating and stirring operation is performed 2 to 3 times, the heating and stirring operation including heating the white chocolate at the set temperature in the oven for 5 to 7 minutes and stirring it with the heat-resistant spatula. The white chocolate is transferred onto a heat-resistant sheet. After being transferred onto the heat-resistant sheet, the white chocolate is placed in a freezer set to -18°C to -20°C for 30 to 40 minutes to rapidly cool it until its core temperature reaches 16°C to 18°C. The rapidly cooled white chocolate is taken out of the freezer, and the rapidly cooled white chocolate is broken into bite-sized pieces to form a white chocolate confection.

## Description

### Field of the Invention

The present invention relates to a white chocolate confection using chocolate as a raw material and a method for producing the same.

### Background Art

Conventionally, chocolate confections using chocolate as a raw material have been popular for their delicious taste, and many chocolate confections already exist. However, it has not been found that any existing white chocolate confection uses only white chocolate, maintains the rich flavor characteristic of white chocolate, and also has a distinctive crackling texture reminiscent of crunch, along with a pleasant melt-in-the-mouth quality.

Under such circumstances, the inventor of the present patent application obtained knowledge that it is possible to produce a white chocolate confection which uses only white chocolate, maintains the rich flavor of white chocolate, and has a moist and soft texture and pleasant melt-in-the-mouth quality, and further, as a baked confection, retains the smooth melt-in-the-mouth quality of chocolate while containing granules reminiscent of crunch within the chocolate dough, which gives the confection a crackling texture and distinctive aroma.

Regarding the technology concerning the chocolate confection production method according to the present patent application, only Patent Document 1 by the applicant of the present application exists, and no other document disclosing the technical concept of the present invention has been found.

### Prior Art Documents

### Patent Document

Patent Document 1: Japanese Unexamined Patent Application Publication No. 2015-208310

### SUMMARY OF THE INVENTION

### Problems to be Solved by the Invention

In the technique described in Patent Document 1 (hereinafter referred to as "Comparative Prior Art"), there was a problem in that the step of finely crushing plate-shaped white chocolate and the step of baking it each required a long time, resulting in timeconsuming production. In addition, the chocolate confections produced by the Comparative Prior Art had a somewhat smooth surface.

The present invention proposes a method for producing a white chocolate confection by improving the method described in Patent Document 1, so as to enable faster production and to obtain a white chocolate confection having a new texture and appearance. It was confirmed that, by using square-cut white chocolate pieces, baking them at a high temperature of 170°C to 190°C in an electric oven, and then rapidly cooling the white chocolate at a low temperature of -18°C to -20°C, the rich flavor of white chocolate changed into a bitter flavor, and sugar recrystallized by the sugar bloom phenomenon underwent caramelization through heating at a high temperature. As a result, it was found that particles reminiscent of crunch were generated, enabling production in a shorter time compared to the production method of the Comparative Prior Art, and that a white chocolate confection having a new and distinctive crackling texture could be produced. Furthermore, a white chocolate confection having a rugged appearance and texture like small rocks could also be produced.

### Means for Solving the Problem

A method for producing white chocolate confection, includes:
uniformly spreading square-cut white chocolate pieces on a baking sheet to a height of 1.0 cm to 1.5 cm, the square-cut white chocolate pieces each having a size of 1.8 cm to 2.2 cm in length, 1.8 cm to 2.2 cm in width, and 1.0 cm to 1.5 cm in height;
heating the white chocolate in an oven set to a temperature of 170°C to 190°C for 16 to 18 minutes;
stirring the white chocolate with a heat-resistant spatula after the heating is completed, to avoid unevenness, in a state in which cacao components contained in the white chocolate are browned by the heating, a dark brown layer is formed on a surface of the white chocolate, and fat content oozes out;
performing a heating and stirring operation 1 to 2 times, the heating and stirring operation including heating the white chocolate at the set temperature in the oven for 5 to 7 minutes and stirring it with the heat-resistant spatula;
transferring the white chocolate onto a heat-resistant sheet;
placing the white chocolate transferred on the heat-resistant sheet in a freezer set to -18°C to -20°C for 30 to 40 minutes to rapidly cool it until its core temperature reaches 16°C to 18°C;
taking the rapidly cooled white chocolate out of the freezer; and
breaking the rapidly cooled white chocolate into bite-sized pieces to form a white chocolate confection.

### Effects of the Invention

According to the present invention, because heating is performed at a higher temperature than in the Comparative Prior Art described in Patent Document 1, the heating time can be reduced. Specifically, while 5 to 6 stirrings after heating were required in the Comparative Prior Art, the confection could be completed with only 2 to 3 stirrings in the present invention, which makes it possible to reduce the manufacturing time by approximately 45% or more compared to the Comparative Prior Art.

Moreover, according to the present invention, numerous granule-like structures formed by recrystallized sugar are included, thereby enabling the formation of not only a rocky appearance but also a rock-like texture. Furthermore, according to the present invention, it is possible to produce a white chocolate confection that has a dark brown color and a deep, bitter flavor. When sugar recrystallized due to the sugar bloom phenomenon of white chocolate is heated, it undergoes caramelization, thereby generating particles reminiscent of crunch. The resulting confection has a distinctive crackling texture within the baked dough, melts in the mouth during consumption, and provides excellent melt-in-the-mouth quality, a pleasant aftertaste, and a pleasant aroma.

### BRIEF DESCRIPTION OF THE DRAWINGS

FIG. 1 is a schematic diagram showing the manufacturing flow of a white chocolate confection according to an embodiment.
FIG. 2 is a set of photographs showing each step in the manufacturing flow of a white chocolate confection according to the embodiment.

### EMBODIMENTS FOR CARRYING OUT THE INVENTION

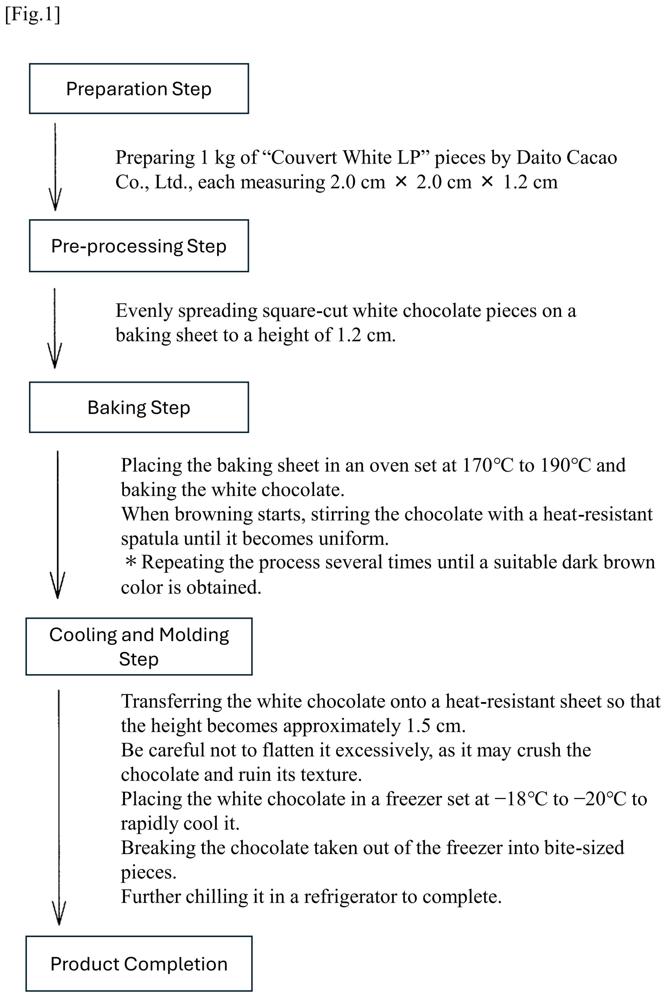

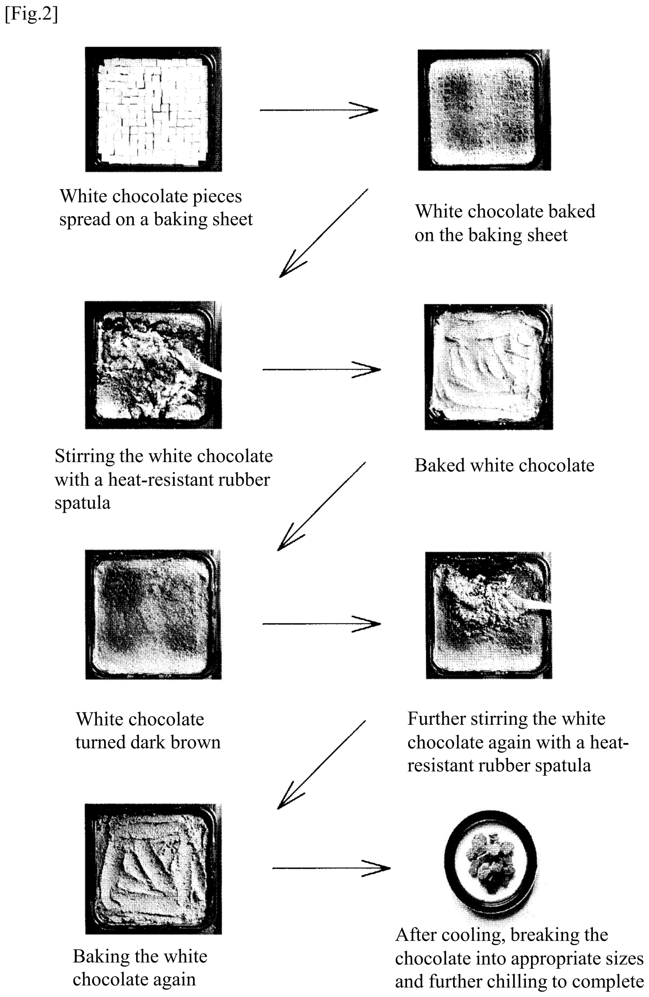

Hereinafter, an embodiment of the method for producing a white chocolate confection according to the present invention will be described. FIG. 1 is the manufacturing flow thereof. FIG. 2 is a set of photographs of a white chocolate confection in each step of the manufacturing flow.

First, square-cut white chocolate pieces (product name: Couvert White LP, manufactured by Daito Cacao Co., Ltd.), each having dimensions of 2.0 cm × 2.0 cm × 1.2 cm, are evenly spread on a baking sheet to a height of 1.2 cm. An electric oven is prepared, and its temperature is set to 166°C to 180°C.

The white chocolate on the baking sheet is heated in the electric oven for 16 to 18 minutes. When the heating is completed, the cacao components contained in the white chocolate are browned by the heat, and a dark brown layer is formed on the surface of the white chocolate. The fat content contained in the white chocolate oozes out. To avoid unevenness, the white chocolate is stirred with a heat-resistant spatula. Subsequently, it is placed back in the oven set to the above temperature and heated again for 5 to 7 minutes.

After completion of the heating, the white chocolate is stirred again with a heat-resistant spatula and then heated again in the electric oven in the same manner. This operation is repeated 1 to 2 times.

After confirming that the entirety of the previously set white chocolate has an even browned color, the set white chocolate is transferred onto a heat-resistant sheet and placed in a freezer set to -18°C to -20°C for 30 to 40 minutes to thereby rapidly cool it until the core temperature becomes 16°C to 18°C. Thereafter, it is taken out and broken into bite-sized pieces. The completed white chocolate confection is stored in a freezer or a refrigerator and taken out at the time of consumption.

As described above, by placing the white chocolate confection in a freezer to rapidly cool it, it becomes possible to retain a crisp texture without impairing the distinctive aroma of the baked white chocolate. The resulting confection has a rugged appearance, a dark brown color, a roasted aroma, and a bitter taste. Furthermore, when sugar that has recrystallized due to the sugar bloom phenomenon of white chocolate is subjected to baking, it undergoes caramelization. This process generates granules reminiscent of crunch. As a result, the baked dough contains a unique crackling texture, and the confection melts in the mouth while being eaten, offering an excellent melt-in-the-mouth quality, a pleasant aftertaste, and ease of consumption.

Conventionally, when white chocolate is baked using an electric oven or similar appliance, it tends to melt due to heat application. Subsequently, the components contained in the white chocolate, such as (1) cocoa butter, (2) sugar, and (3) milk solids, undergo changes via the Maillard reaction and eventually become scorched. However, by stirring the white chocolate multiple times during baking using a heat-resistant spatula, uniform baking can be achieved. Furthermore, by heating at a higher temperature and for a longer time than in the Comparative Prior Art, sugar bloom occurs in the white chocolate, causing the sugar to recrystallize. This recrystallized sugar undergoes caramelization during baking, forming dispersed granules that provide a crackling texture reminiscent of crunch. In the present invention, by baking at a high temperature of 170°C to 190°C, similar to the baking temperature for typical baked confections, it becomes possible to produce a chocolate confection that neither burn nor leaks dough, and that features a dark brown color, a rich roasted aroma, a deep bitter flavor with maintained richness, and an excellent melt-in-the-mouth quality.

In producing this white chocolate baked confection, generally, the types of baked confections called baked chocolate are mostly cases where only the surface is baked or where they are baked after being mixed with other foods, but the present invention uses only white chocolate as the raw material. The reason is that chocolate with a rich flavor can be obtained. Also, by rapidly cooling after baking, not only can the proliferation of germs or viruses from a hygiene perspective be suppressed, but it also became possible to retain a crackling texture reminiscent of crunch without impairing the caramel-like flavor.

In the above embodiment, Couvert White LP manufactured by Daito Cacao Co., Ltd. is used as the white chocolate. However, the confection can be produced using white chocolate from any manufacturer.

### EXAMPLES

Next, the present invention will be described in further detail with reference to the following example.

First, the following materials were prepared:

### <Materials>

White chocolate: Couvert White LP pieces, manufactured by Daito Cacao Co., Ltd., each having dimensions of 2.0 cm (length) × 2.0 cm (width) × 1.2 cm (thickness) were used, in a total weight of 1 kg.

In addition, the following tools were prepared:

### <Tools>

| | |
|---|---|
| Heat-resistant spatula: | Heat-resistant rubber spatula |
| Electric oven: | Manufactured by Cleanup Co., model number FE600M |
| Baking sheet: | External dimensions 33.5 cm × 33.5 cm × 3 cm |
| | Inner dimensions 30 cm × 30 cm × 2 cm |
| Heat-resistant sheet: | Manufactured by Demarle, 35 cm × 30 cm |
| | Heat resistance up to 260°C |
| Electric refrigerator: | Manufactured by FUJITSU, model number ER-B27W |

First, (1) only square-cut white chocolate pieces were used as the raw material. These pieces, each measuring 2.0 cm × 2.0 cm × 1.2 cm, were spread and set on a baking sheet to form a layer of white chocolate with a height of 1.2 cm. Next, (2) the oven was set to a temperature of 170°C to 190°C. Subsequently, (3) the white chocolate was placed in the oven and heated for 16 to 18 minutes. When the heating was completed, sugars and the like contained in the white chocolate were browned by the heat, a dark brown layer was formed on the surface, and the fat content contained in the white chocolate oozed out. At this stage, the mixture was stirred with a heat-resistant rubber spatula to avoid unevenness.

(4) The white chocolate was placed in the oven and baked again for 5 to 7 minutes at the same temperature setting. After baking, the operation of (3) was repeated. Then, it was baked again for another 5 to 7 minutes. Finally, the browning and the condition of the white chocolate were checked, and the operation of (3) was repeated to adjust the entire product to an even state.

(5) The above-baked white chocolate was transferred from the oven to a baking sheet while still hot. At this time, care was taken not to flatten the air layer formed in the baked white chocolate and not to over-smooth it during transfer. (6) It was placed in a freezer set to -18°C to -20°C and rapidly cooled. The rapid cooling time was set to 30 to 40 minutes. (7) For molding, it was temporarily taken out of the freezer and broken into bite-sized pieces, thereby giving it a rugged appearance like small rocks. Then, it was further cooled in a refrigerator to complete the product.

White chocolate composition ratio (amount contained per 100 g):
Cocoa butter: 22 g
Milk solids: 16 g
Milk fat content: 5 g
Granulated sugar: 57 g

### Evaluation

The shape retention, flavor, and texture of the chocolate confection in the specific example obtained by the above procedure were evaluated by comparison with the same white chocolate used as the material. The evaluation was conducted based on the evaluation criteria below, and the average score was calculated from the evaluations of a panel of 10 members. The results are shown in Table 1.

### Evaluation Criteria

### Shape Retention

5: The dough was cohesive and non-sticky. It could be easily handled. The shape before crushing was retained even after being crushed.
4: There was slight stickiness, but it could be easily handled. The dough was slightly deformed by crushing, but the original shape was mostly retained.
3: There was stickiness, but handling was possible. The dough was deformed by crushing, but the shape at the time of crushing was retained to some extent after crushing.
2: The dough was sticky and highly fluid. It was difficult to handle. Due to crushing, the dough did not retain its original form, and the shape at the time of crushing was considerably collapsed.
1: The dough was highly fluid and difficult to handle. Due to crushing, the dough collapsed greatly, and the shape at the time of crushing was completely lost.

### Flavor and Texture of the Confection

5: A distinctive flavor, a crackling texture, and a good melt-in-the-mouth texture were observed.
4: A distinctive flavor and a crackling texture were observed.
3: A distinctive flavor and a melt-in-the-mouth feeling were observed.
2: The distinctive flavor and crackling texture are weak, and the melt-in-the-mouth quality was unsatisfactory.
1: There was no distinctive flavor or crackling texture, and the melt-in-the-mouth quality was poor.

**[Table 1]**

| Evaluation Results | |
|---|---|
| Shape Retention | 4.6 |
| Flavor and Texture of the Confection | 4.8 |

In terms of shape retention, similarly favorable evaluations were obtained compared to the Comparative Prior Art. The flavor and texture were evaluated as having a distinctive flavor, a novel crackling texture, and a good bitter flavor.

In the Comparative Prior Art, the molding process was carried out after the baked white chocolate had been rapidly cooled to a temperature of approximately 10°C or lower. In contrast, in the present invention, the baked white chocolate was taken out of the freezer when its temperature reached 16°C to 18°C, approximately 30 to 40 minutes after being placed in the freezer. As a result, the molding operation could be carried out before the chocolate had completely solidified, thereby shortening the working time and enabling the formation of a chocolate confection with a rock-like appearance and texture, as compared to the conventional method.

## Claims

1. A method for producing a white chocolate confection, the method comprising:
uniformly spreading square-cut white chocolate pieces on a baking sheet to a height of 1.0 cm to 1.5 cm, the square-cut white chocolate pieces each having a size of 1.8 cm to 2.2 cm in length, 1.8 cm to 2.2 cm in width, and 1.0 cm to 1.5 cm in height;
heating the white chocolate in an oven set to a temperature of 170°C to 190°C for 16 to 18 minutes;
stirring the white chocolate with a heat-resistant spatula after the heating is completed, to avoid unevenness, in a state in which cacao components contained in the white chocolate are browned by the heating, a dark brown layer is formed on a surface of the white chocolate, and fat content oozes out;
performing a heating and stirring operation 1 to 2 times, the heating and stirring operation including heating the white chocolate at the set temperature in the oven for 5 to 7 minutes and stirring it with the heat-resistant spatula;
transferring the white chocolate onto a heat-resistant sheet;
placing the white chocolate transferred on the heat-resistant sheet in a freezer set to -18°C to -20°C for 30 to 40 minutes to rapidly cool it until its core temperature reaches 16°C to 18°C;
taking the rapidly cooled white chocolate out of the freezer; and
breaking the rapidly cooled white chocolate into bite-sized pieces to form a white chocolate confection.

2. A white chocolate confection produced by the method for producing a white chocolate confection as recited in claim 1.
